(19) Europäisches Patentamt
European Patent Office
Office européen des brevets

(11) EP 3 776 697 B1

(12) FASCICULE DE BREVET EUROPEEN

(45) Date de publication et mention de la délivrance du brevet:
**08.06.2022 Bulletin 2022/23**

(21) Numéro de dépôt: **19716891.7**

(22) Date de dépôt: **09.04.2019**

(51) Classification Internationale des Brevets (IPC):
***H01M 4/13*** *(2010.01)* ***H01M 4/38*** *(2006.01)*
***H01M 4/62*** *(2006.01)* ***H01M 10/052*** *(2010.01)*
***H01M 10/0568*** *(2010.01)* ***H01M 10/0569*** *(2010.01)*
*H01M 4/40 (2006.01)*

(52) Classification Coopérative des Brevets (CPC):
**H01M 4/13; H01M 4/38; H01M 4/625; H01M 10/052; H01M 10/0568; H01M 10/0569;** H01M 4/382; H01M 4/405; H01M 2300/0037; Y02E 60/10

(86) Numéro de dépôt international:
**PCT/EP2019/058969**

(87) Numéro de publication internationale:
**WO 2019/197410 (17.10.2019 Gazette 2019/42)**

# (54) ÉLÉMENT ÉLECTROCHIMIQUE DE TYPE LITHIUM/SOUFRE

ELEKTROCHEMISCHES ELEMENT DES LITHIUM-SCHWEFEL-TYPS

LITHIUM/SULFUR ELECTROCHEMICAL ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.04.2018 FR 1853161**

(43) Date de publication de la demande:
**17.02.2021 Bulletin 2021/07**

(73) Titulaire: **SAFT**
**92300 Lavallois-Perret (FR)**

(72) Inventeurs:
- **FISCHER, Florent**
**33520 BRUGES (FR)**
- **HEZEQUE, Thierry**
**33240 Aubie Espessas (FR)**
- **JORDY, Christian**
**33440 SAINT LOUIS DE MONTFERRAND (FR)**

(74) Mandataire: **Hirsch & Associés**
**154 Boulevard Haussmann**
**75008 Paris (FR)**

(56) Documents cités:
**WO-A1-2012/100301** **WO-A1-2016/192111**
**CN-B- 102 903 887** **DE-T5-112015 005 161**
**JP-A- 2015 115 270**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Processed by Luminess, 75001 PARIS (FR)

## Description

DOMAINE TECHNIQUE

Le domaine technique de l'invention est celui des éléments électrochimiques rechargeables de type lithium/soufre.

ETAT DE LA TECHNIQUE

Le terme « élément » utilisé dans ce qui suit désigne un élément électrochimique. Les termes « élément » et « élément électrochimique » sont utilisés de manière interchangeable dans ce qui suit.

Un élément électrochimique lithium/soufre (Li/S) est connu de l'état de la technique. Il comprend typiquement au moins une électrode positive (cathode) de soufre élémentaire, un électrolyte liquide organique et au moins une électrode négative (anode) de lithium métal ou d'un alliage métallique de lithium. La cathode est généralement composite, c'est-à-dire qu'elle est préparée à partir de soufre élémentaire et d'additifs non électrochimiquement actifs. Comme additifs non électrochimiquement actifs, on peut citer un conducteur électronique permettant d'améliorer la conductivité électronique de la cathode car le soufre est un isolant électronique. On peut aussi citer un liant polymère permettant d'assurer la cohésion entre les différents matériaux de la cathode.

Partant d'une cathode de soufre élémentaire et d'une anode de lithium métal, l'élément électrochimique se trouve initialement à l'état chargé. En décharge, le soufre élémentaire de la cathode se réduit en sulfure de lithium $Li_2S$ et le lithium métallique ou l'alliage métallique de lithium s'oxyde à l'anode. Les réactions suivantes ont lieu aux électrodes :

Cathode : Ss + 16 $e^-$ ---> 8 $S^{2-}$

Anode : Li ---> $Li^+$ + $e^-$

La réaction globale de décharge de l'élément est : 16 Li + Ss ---> 8 $Li_2S$

Au cours de la réduction du soufre qui se produit lors de la décharge de l'élément, les molécules cycliques de soufre (sous forme d'octasoufre $S_8$) sont réduites et forment des chaines linéaires de polysulfures de lithium, de formule générale $Li_2S_n$, n allant généralement de 2 à 8. Les premiers composés formés au cours de la décharge de l'élément sont les polysulfures de lithium à chaines longues, tels que $Li_2S_8$ ou $Li_2S_6$.

A la différence d'un élément électrochimique lithium-ion, un élément électrochimique lithium/soufre comprend typiquement un électrolyte dont le solvant est à base d'éthers. Les éthers, tels que le 1,3-dioxolane ou le tétrahydrofurane sont utilisés depuis plusieurs décennies et permettent une solubilisation importante des polysulfures de lithium. Les solvants organiques de type glyme de formule générale $H-[O-CH_2-CH_2]_n-OH$, tels que le 1,2-diméthoxyéthane (DME), sont aussi fréquemment utilisés comme solvant de l'électrolyte.

Les polysulfures de lithium à chaines longues, tels que $Li_2S_8$ ou $Li_2S_6$ se dissolvent dans l'électrolyte au cours de la décharge de l'élément et sont susceptibles - en cas d'ouverture accidentelle du conteneur de l'élément et d'une mise en contact de l'électrolyte ou des électrodes avec l'air ambiant - de réagir avec l'humidité contenue dans l'air ambiant, et ainsi d'entrainer la formation de sulfure d'hydrogène, gaz toxique.

On cherche donc à mettre à disposition un élément électrochimique qui, dans l'hypothèse où de l'électrolyte viendrait à s'échapper du conteneur de cet élément ou qu'une cathode rentre en contact avec l'air ambiant, émette le moins possible de sulfure d'hydrogène.

On cherche également à ce que l'élément électrochimique conserve une capacité massique élevée, c'est-à-dire supérieure ou égale à 1500 mAh/g de soufre.

Le document WO 2016/192111 décrit un élément électrochimique lithium/soufre comprenant une cathode comprenant un matériau composite comprenant du carbone microporeux et du soufre. Dans l'exemple de ce document, l'électrolyte contient un sel qui est de l'hexafluorophosphate de lithium ($LiPF_6$). Ce document vise à mettre à disposition un élément présentant un rendement coulombique élevé et une capacité stable dans des conditions de cyclage. Il ne vise pas à réduire la quantité de sulfure d'hydrogène susceptible d'être émise en cas d'ouverture accidentelle du conteneur de l'élément.

Le document WO 2012/100301 décrit un élément électrochimique de type lithium-soufre dans lequel la cathode est au mois partiellement constituée d'un matériau composite soufre-carbone. Ce matériau composite soufre-carbone comporte des micropores d'une taille inférieure à 1,6 nm et des mésopores d'une taille supérieure à 6 nm. Le soufre est présent dans les micropores. Les mésopores sont essentiellement exempts de soufre. L'électrolyte peut être une solution de $LiPF_6$ à 1 $mol.L^{-1}$ dans un mélange de carbonates.

Le document CN 102 903 887 décrit une électrode au soufre, sa préparation et son application. L'électrode au soufre comprend un composite soufre / carbone, un agent conducteur et un liant, le soufre étant un matériau actif d'électrode. La teneur en composite soufre / carbone de l'électrode est de 10 à 95 %. Un rapport massique du soufre

au matériau carboné poreux dans le composite soufre / carbone est de 1 : 0,05-19. Le matériau carboné poreux dans le composite soufre / carbone a une conductivité supérieure ou égale à 0,1 S/cm, une surface spécifique supérieure ou égale à 500 $m^2/g$ et un volume de pores supérieur ou égal à 0,3 $cm^3/g$. La structure des pores est microporeuse et mésoporeuse. L'électrode au soufre présente les avantages d'une énergie spécifique élevée, d'une excellente stabilité en cyclage, d'un matériau d'électrode bon marché et facilement disponible, et d'un procédé de préparation simple et pratique appliqué à un élément électrochimique secondaire.

Le document DE 11 2015 005161 décrit un élément électrochimique de type lithium-soufre dans lequel la cathode comprend un composite soufre / carbone. Le soufre est logé dans les pores du carbone. Le diamètre moyen des pores du carbone va de 1 à 6 nm. Le carbone poreux présente une surface spécifique allant de 2000 $m^2/g$ à 3000 $m^2/g$. Le solvant de l'électrolyte peut être un carbonate cyclique ou linéaire.

Le document JP 2015-115270 décrit un élément électrochimique lithium/soufre dont l'électrolyte comprend un solvant à base d'éther et un sel constitué de bis(fluorosulfonyl)imidure de lithium LiFSI. Ce document vise à supprimer la dégradation des performances électriques de l'élément en charge et en décharge. Il est indiqué que le dioxolane, qui fait partie de la famille des éthers cycliques, peut être avantageusement utilisé comme solvant de l'électrolyte dans le but de stabiliser les performances électriques de l'élément en charge et en décharge. Ce document ne vise pas non plus à réduire la quantité de sulfure d'hydrogène susceptible d'être émise en cas d'ouverture accidentelle du conteneur de l'élément.

## RESUME DE L'INVENTION

L'invention propose un élément électrochimique de type lithium/soufre comprenant :

a) une cathode comprenant :

i) du carbone présentant une structure poreuse comprenant des pores avec un diamètre moyen inférieur ou égal à 6 nm ;
ii) du soufre avec un degré d'oxydation pouvant aller de 0 à -2 dans les pores du carbone ;

b) un électrolyte comprenant :

i) au moins un solvant organique qui est un carbonate ;
ii) un ou plusieurs sels, au moins un sel étant du bis(fluorosulfonyl)imidure de lithium (LiFSI) ;

c) une anode comprenant du lithium métal ou un alliage métallique de lithium.

Il a été découvert de manière surprenante que l'utilisation dans la cathode de carbone présentant une structure poreuse comprenant des pores avec un diamètre moyen inférieur ou égal à 6 nm en association avec un électrolyte comprenant au moins un carbonate et au moins un sel de bis(fluorosulfonyl)imidure de lithium (LiFSI) permettait de réduire de manière significative la quantité de sulfure d'hydrogène susceptible d'être émise par l'élément en cas d'exposition accidentelle de l'électrolyte ou des électrodes à de l'humidité.

Selon un mode de réalisation, le carbone présente une structure poreuse comprenant des pores avec un diamètre moyen inférieur ou égal à 3 nm, ou inférieur ou égal à 2 nm.

Selon un mode de réalisation, au moins 50 % ou au moins 75% du volume poreux est constitué de pores avec un diamètre inférieur ou égal à 6 nm.

Selon un mode de réalisation, au moins 50 % ou au moins 75% du volume poreux est constitué de pores avec un diamètre inférieur ou égal à 2 nm.

Selon un mode de réalisation, le soufre est du soufre élémentaire solide et :

- la masse de soufre élémentaire solide représente de 30 à 80 % ou de 55 à 65 % de la somme des masses de soufre élémentaire solide et de carbone ;
- la masse du carbone représente de 70 à 20 % ou de 45 à 35% de la somme des masses de soufre élémentaire solide et de carbone.

Selon un mode de réalisation, la cathode comprend au moins un liant et au moins un composé conducteur électronique et le soufre est du soufre élémentaire solide et :

- la masse de soufre élémentaire solide représente de 30 à 80 % de la somme des masses du soufre élémentaire solide, du carbone, dudit au moins un liant et dudit au moins un composé conducteur électronique ;

- la masse de carbone représente de 10 à 60 % de la somme des masses du soufre élémentaire solide, du carbone, dudit au moins un liant et dudit au moins un composé conducteur électronique ;
- la masse dudit au moins un liant représente de 3 à 8 % de la somme des masses du soufre élémentaire solide, du carbone, dudit au moins un liant et dudit au moins un composé conducteur électronique ;
- la masse dudit au moins un composé conducteur électronique représente de 2 à 7 % de la somme des masses du soufre élémentaire solide, du carbone, dudit au moins un liant et dudit au moins un composé conducteur électronique.

Selon un mode de réalisation, l'électrolyte comprend un premier solvant organique qui est un carbonate cyclique et un second solvant organique qui est un carbonate linéaire.
Selon un mode de réalisation,

- le volume du ou des carbonate(s) cyclique(s) représente de 10 à 50 % ou de 15 à 25% du volume total des solvants organiques ;
- le volume du ou des carbonate(s) linéaire(s) représente de 50 à 90 % ou de 75 à 85 % du volume total des solvants organiques.

Selon un mode de réalisation, le carbonate cyclique est monosubstitué par du fluor.
Selon un mode de réalisation, l'électrolyte ne comprend aucun ester et/ou ne comprend aucun éther.
Selon un mode de réalisation, le carbonate cyclique est du carbonate d'éthylène, éventuellement monosubstitué par du fluor, et le carbonate linéaire est du carbonate de diméthyle.
Selon un mode de réalisation, 20 % au plus du volume poreux du carbone ou 10 % au plus du volume poreux du carbone est constitué de pores avec un diamètre supérieur à 6 nm et allant jusqu'à 50 nm.

## DESCRIPTION DES FIGURES

La figure 1 représente une vue schématique en coupe d'un empilement éclaté d'une cathode, d'un séparateur et d'une anode dans un élément électrochimique selon l'invention.
La figure 2 représente les courbes de décharge des éléments A et B.
La figure 3 représente les quantités cumulées de sulfure d'hydrogène émises par les électrodes des éléments C, D et E exposées à de l'humidité.
La figure 4 représente les courbes de décharge des éléments F et G.

## EXPOSE DE MODES DE REALISATION

Les différents constituants d'un élément électrochimique selon l'invention vont être décrits dans ce qui suit.

### Cathode :

La cathode est un composite préparé à partir de soufre solide élémentaire électrochimiquement actif et de composés non électrochimiquement actifs.
Le soufre solide élémentaire existe sous différentes formes moléculaires. La forme préférée est le soufre alpha Sa, de formule Ss correspondant au cyclooctasoufre, qui est la forme thermodynamiquement la plus stable.
Les composés non électrochimiquement actifs comprennent :

- le carbone présentant une structure poreuse comprenant des pores avec un diamètre moyen inférieur ou égal à 6 nm et
- généralement au moins un composé conducteur électronique et au moins un liant.

Le diamètre moyen des pores peut être inférieur ou égal à 3 nm, ou encore inférieur ou égal à 2 nm.
Le carbone présentant une structure poreuse jouant le rôle de percolant électronique. Les pores de la structure poreuse logent les particules de soufre élémentaire.
Un procédé possible pour l'incorporation de particules de soufre élémentaire dans les pores de la structure poreuse du carbone est le suivant. On mélange le carbone poreux avec du soufre élémentaire solide. Typiquement, la masse de soufre élémentaire solide représente de 30 à 80% ou de 55 à 65% de la somme des masses de soufre élémentaire solide et de carbone. La masse de carbone représente typiquement de 70 à 20% ou de 45 à 35% de la somme des masses de soufre élémentaire solide et de carbone.

Le mélange est chauffé à une température voisine de 155°C pendant environ 5 heures, sous vide, pour permettre aux molécules de soufre de pénétrer dans les pores ouverts du carbone. Au voisinage de 155°C, le soufre à l'état liquide présente sa viscosité la plus faible. Le mélange est ensuite chauffé sous gaz inerte à une température d'environ 300°C pendant environ 30 minutes, ce qui a pour effet de sublimer le soufre et d'en éliminer l'excès. Le produit obtenu est ensuite généralement mélangé à au moins un liant et au moins un composé bon conducteur électronique.
Le liant peut être choisi parmi la carboxyméthylcellulose (CMC), un copolymère de butadiène - styrène (SBR), le polytétrafluoroéthylène (PTFE), le polyamideimide (PAI), le polyimide (PI), le caoutchouc styrène-butadiène (SBR), les poly(acide acrylique) (PAA), l'alcool polyvinylique, le polyfluorure de vinylidène (PVDF) et un mélange de ceux-ci.
Le composé conducteur électronique est généralement du noir de carbone.
On obtient une encre que l'on dépose sur l'une ou les deux faces d'un collecteur de courant pouvant être un feuillard en aluminium. Le collecteur de courant enduit d'encre est laminé afin d'ajuster son épaisseur. Une cathode est ainsi obtenue.
Une composition typique de l'encre déposée sur le collecteur de courant peut être la suivante :

- de 30 à 80 % en masse, de préférence de 50 à 55 % de soufre élémentaire solide par rapport à la somme des masses du soufre élémentaire solide, du carbone, du ou des liant(s) et du ou des composé(s) conducteur(s) électronique(s) ;
- de 10 à 60 % en masse, de préférence de 30 à 35 % de carbone poreux solide par rapport à la somme des masses du soufre élémentaire solide, du carbone, du ou des liant(s) et du ou des composé(s) conducteur(s) électronique(s) ;
- de 3 à 8 % en masse, de préférence de 5 à 7 % de liant par rapport à la somme des masses du soufre élémentaire solide, du carbone, du ou des liant(s) et du ou des composé(s) conducteur(s) électronique(s) ;
- de 2 à 7 % en masse, de préférence de 3 à 5% de composé conducteur électronique par rapport à la somme des masses du soufre élémentaire solide, du carbone, du ou des liant(s) et du ou des composé(s) conducteur(s) électronique(s).

La quantité de soufre élémentaire est mesurée sur le composite par analyse thermogravimétrique après traitement à 300°C.

Anode :

La matière active de l'anode est un feuillard constitué de lithium métallique ou d'un alliage métallique de lithium.

Electrolyte :

L'électrolyte est liquide et comprend un ou plusieurs solvants organiques, au moins un de ces solvants organiques étant un carbonate, dans lequel (ou lesquels) est (ou sont) dissous un (ou plusieurs) sel(s), au moins un de ces sels étant du bis(fluorosulfonyl)imidure de lithium LiFSI de formule :

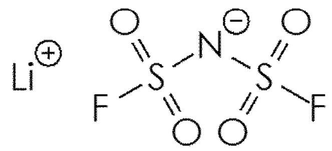

Le carbonate peut être un carbonate cyclique ou linéaire. Le carbonate cyclique peut être mono- ou plurisubstitué par un ou plusieurs atomes d'halogène, tel que le fluor.
Des exemples de carbonates cycliques sont le carbonate d'éthylène (EC), le carbonate de propylène (PC) et le carbonate de butylène (BC). Le carbonate d'éthylène (EC) et le carbonate de propylène (PC) sont préférés. Le carbonate d'éthylène peut être monosubstitué par du fluor (FEC). L'électrolyte peut aussi contenir du carbonate de vinylène.
Des exemples de carbonates linéaires sont le carbonate de diméthyle (DMC), le carbonate de diéthyle (DEC), le carbonate de méthyle éthyle (EMC) et le carbonate de méthyle propyle (PMC). Le carbonate de diméthyle (DMC) est préféré.
Le pourcentage en volume de carbonate(s) peut être supérieur ou égal à 50%, supérieur ou égal à 60%, supérieur ou égal à 70%, supérieur ou égal à 80%, supérieur ou égal à 90% de la somme des volumes des solvants organiques. De préférence, l'électrolyte ne contient aucun ester et/ou ne contient aucun éther. De préférence encore, l'électrolyte ne contient pas de solvant organique autre qu'un ou plusieurs carbonates.
L'électrolyte peut comprendre un premier solvant organique qui est un carbonate cyclique et un second solvant

organique qui est un carbonate linéaire. De préférence, l'électrolyte ne contient pas de solvant organique autre qu'un ou plusieurs carbonate(s) cyclique(s) et autre qu'un ou plusieurs carbonate(s) linéaire(s).

Le volume dudit au moins un carbonate cyclique peut représenter de 10 à 50% ou de 20 à 40% ou de 15 à 25% du volume total des solvants organiques. Le volume dudit au moins un carbonate linéaire peut représenter de 90 à 50% ou 80 à 60% ou de 85 à 75% du volume total des solvants organiques.

Le carbonate cyclique peut être du carbonate d'éthylène, éventuellement monosubstitué par du fluor, et le carbonate linéaire peut être du carbonate de diméthyle.

L'électrolyte contient nécessairement du bis(fluorosulfonyl)imidure de lithium $LiN(SO_2F)_2$ (LiFSI) mais peut également contenir un ou plusieurs autres sels, tels que le perchlorate de lithium $LiClO_4$, l'hexafluoroantimonate de lithium $LiSbF_6$, l'hexafluorophosphate de lithium $LiPF_6$, le tétrafluoroborate de lithium $LiBF_4$, l'hexafluoroarsénate de lithium $LiAsF_6$, le trifluorométhanesulfonate de lithium $LiCF_3SO_3$, le bis(trifluorométhanesulfonyl)imidure de lithium $LiN(CF_3SO_2)_2$ (LiTFSI), le tris(trifluorométhanesulfonyl)méthylure de lithium $LiC(CF_3SO_2)_3$ (LiTFSM), le bis(pentafluoroéthylsulfonyl)imidure de lithium $LiN(C_2F_5SO_2)_2$ (LiBETI), le 4,5-dicyano-2-(trifluoromethyl) imidazolide de lithium (LiTDI), le bis(oxalatoborate) de lithium (LiBOB), le tris(pentafluoroethyl)trifluorophosphate de lithium $LiPF_3(CF_2CF_3)_3$ (LiFAP) et les mélanges de ceux-ci.

Le pourcentage en masse de bis(fluorosulfonyl)imidure de lithium LiFSI peut être supérieur ou égal à 50%, supérieur ou égal à 60%, supérieur ou égal à 70%, supérieur ou égal à 80%, supérieur ou égal à 90%, de préférence égal à 100% de la somme des masses des sels dissous dans le ou les solvant(s) organique(s).

La concentration de bis(fluorosulfonyl)imidure de lithium LiFSI dans l'électrolyte peut être supérieure ou égale à 1 $mol.L^{-1}$ ou être inférieure ou égale à 1 $mole.L^{-1}$. Elle peut être comprise entre 0,1 et 3 $mol.L^{-1}$, ou entre 0,5 et 1,5 $mol.L^{-1}$, ou encore être environ 1 $mol.L^{-1}$. Pour préparer l'électrolyte, on dissout le sel de bis(fluorosulfonyl)imidure de lithium LiFSI avec éventuellement les autres sels de lithium dans ledit au moins un carbonate et éventuellement d'autres solvants organiques.

Séparateur :

Un séparateur empêche un contact électrique entre une anode et une cathode mais permet néanmoins le transport des ions entre les électrodes. Le matériau du séparateur peut être choisi parmi les matériaux suivants : une polyoléfine, par exemple le polypropylène et le polyéthylène, un polyester, des fibres de verre liées entre elles par un polymère, le polyimide, le polyamide, le polyaramide, le polyamideimide et la cellulose. Le polyester peut être choisi parmi le téréphtalate de polyéthylène (PET) et le téréphtalate de polybutylène (PBT). Avantageusement, le polyester ou le polypropylène ou le polyéthylène contient ou est revêtu d'un matériau choisi dans le groupe consistant en un oxyde métallique, un carbure, un nitrure, un borure, un siliciure et un sulfure. Ce matériau peut être $SiO_2$ ou $Al_2O_3$.

La figure 1 est une représentation schématique éclatée d'un empilement d'une cathode (2), d'un séparateur (3) et d'une anode (4) dans un élément électrochimique (1) selon l'invention. La cathode présente une structure poreuse (5). Les pores de la cathode logent du soufre. Une couche de passivation stable (SEI pour « Solid Electrolyte Interface ») (6) est formée à la surface de la cathode (2). Elle résulte de la réduction à la cathode d'espèces chimiques contenues dans l'électrolyte au cours de la décharge de l'élément.

Préparation du faisceau électrochimique :

On forme un faisceau électrochimique en intercalant un séparateur entre au moins une cathode et au moins une anode. On insère le faisceau électrochimique dans le conteneur de l'élément. Le conteneur de l'élément peut être de format parallélépipèdique ou cylindrique. Dans ce dernier cas, le faisceau électrochimique est spiralé pour former un montage cylindrique des électrodes.

Remplissage du conteneur :

On remplit le conteneur muni du faisceau électrochimique de l'électrolyte tel que décrit ci-avant.

La demanderesse a constaté de manière surprenante que l'association d'une cathode de carbone présentant une structure poreuse comprenant des pores avec un diamètre moyen inférieur ou égal à 6 nm avec un électrolyte comprenant au moins un carbonate et au moins un sel de bis(fluorosulfonyl)imidure de lithium (LiFSI) permettait de réduire la quantité d'hydrogène sulfureux susceptible d'être émis en cas d'ouverture accidentelle du conteneur de l'élément. Sans vouloir être lié par la théorie, la Demanderesse est d'avis qu'au cours du fonctionnement de l'élément, les polysulfures de lithium à chaines longues, tels que $Li_2S_8$ ou $Li_2S_6$ restent confinés dans la porosité du carbone et ne sont pas présents dans l'électrolyte. D'autre part, la Demanderesse est d'avis que les espèces chimiques situées dans la couche de passivation de la cathode (SEI) dans l'élément selon l'invention, ont une plus faible réactivité vis-à-vis de l'eau et que cette plus faible réactivité est responsable de la plus faible émission d'hydrogène sulfureux.

Outre la réduction de la quantité d'hydrogène sulfureux dégagé, l'invention permet de réduire la quantité d'électrolyte contenue dans l'élément. En effet, il est d'usage lors de la conception d'un élément lithium-soufre de prévoir un excès d'électrolyte. Cet excès sert à compenser l'augmentation de la viscosité de l'électrolyte provoquée par la dissolution des polysulfures de lithium au cours de la décharge de l'élément. On rappelle que la décharge d'un élément lithium/soufre entraine la formation de polysulfures de lithium qui se dissolvent dans l'électrolyte. Cette dissolution entraine une baisse de la quantité de matière active cathodique et une augmentation de la viscosité de l'électrolyte. L'augmentation de la viscosité de l'électrolyte entraine à son tour une diminution de la mobilité ionique, néfaste au bon fonctionnement de l'élément. Afin de compenser l'augmentation de la viscosité de l'électrolyte, il est d'usage lors de la conception de l'élément de prévoir un excès d'électrolyte. Par exemple, le ratio entre le volume d'électrolyte et la quantité de soufre dans un élément lithium-soufre conventionnel peut être d'au moins 5 $\mu$L d'électrolyte par milligramme de soufre. Or, une augmentation de la quantité d'électrolyte pénalise l'énergie massique et volumique de l'élément électrochimique. L'invention permet de réduire le ratio entre le volume d'électrolyte et la quantité de soufre, par exemple en maintenant ce ratio à une valeur inférieure ou égale à 4 $\mu$L d'électrolyte par milligramme de soufre, et par conséquent d'augmenter l'énergie massique et volumique de l'élément.

EXEMPLES

Six éléments électrochimiques lithium/soufre A-F de capacité 5 mAh ont été fabriqués. Les différentes compositions des cathodes et des électrolytes utilisées pour fabriquer les éléments A à F sont indiquées dans le Tableau 1 ci-après.

Le carbone utilisé dans les exemples A et C est disponible auprès de la société Akzo Nobel sous la dénomination commerciale Ketjen Black EC 600J.

Pour caractériser le volume poreux et la taille des pores des carbones, la technique d'adsorption à l'azote à 77 K a été utilisée. Les isothermes d'adsorption et de désorption ont été mesurées à l'aide d'un appareil de type Belsorp mini II. Le carbone utilisé dans les exemples A et C présente une structure poreuse comprenant des pores avec un diamètre moyen de 6,5 nm. La surface spécifique développée de ce carbone, mesurée par la méthode Brunauer-Emmet-Teller (BET), est de 1439 $m^2$/g.

Le carbone utilisé dans les exemples B, D, E, F et G présente la distribution de porosité suivante :

- volume mésoporeux (noté $V_{mésoporeux}$ correspondant au volume spécifique des pores avec un diamètre moyen supérieur à 2 nm et inférieur à 50 nm) égal à 0,1 $cm^3$/g mesuré selon la méthode « Barrett-Joyner-Halenda » (BJH) à partir des isothermes d'adsorption et de désorption à l'azote ;
- volume microporeux (noté $V_{microporeux}$ correspondant au volume spécifique des pores avec un diamètre moyen inférieur ou égal à 2 nm) égal à 0,9 $cm^3$/g mesuré selon la méthode « t-plot » à partir des isothermes d'adsorption et de désorption à l'azote ;

La méthode BJH permet également d'estimer le diamètre moyen des pores associé au volume mésoporeux, qui sera noté $d_{mésoporeux}$, à partir des isothermes d'adsorption et de désorption à l'azote.

La méthode de Horvath-Kawazoe permet d'estimer le diamètre moyen des pores associé au volume microporeux qui sera noté $d_{microporeux}$, à partir des isothermes d'adsorption et de désorption à l'azote.

Lorsque le carbone présente à la fois un volume mésoporeux et microporeux, l'évaluation du diamètre moyen poreux du carbone est calculé par la moyenne des diamètres microporeux et mésoporeux pondérés par les volumes poreux associés selon la formule suivante :

$$d_{moyen\ poreux} = ((V_{mésoporeux} * d_{mésoporeux}) + (V_{microporeux} * d_{microporeux}))/ (V_{mésoporeux} + V_{microporeux})$$

Le diamètre moyen poreux a été évalué à 0,88 nm pour le carbone utilisé dans les exemples B, D, E, F et G. La surface spécifique de ce carbone, mesurée par l'adsorption d'azote et calculée par la méthode de Brunauer-Emmet-Teller (BET) est de 2163 $m^2$/g.

Le carbone des exemples A et C ne possède pas de volume microporeux. Son diamètre moyen de pores correspond donc au $d_{mésoporeux}$ mesuré par la méthode BJH qui est de 6,5 nm.

Le soufre solide élémentaire utilisé est disponible auprès de la société Sigma-Aldrich, sous la référence 215198.

Le composite de soufre et de carbone a été préparé en mélangeant le carbone avec le soufre élémentaire solide. Le mélange a été chauffé à une température de 155°C pendant environ 5 heures, sous vide pour permettre aux molécules de soufre de pénétrer dans les pores du carbone. Le chauffage du mélange s'est poursuivi à une température de 300°C pendant 30 minutes sous un flux de gaz inerte afin d'éliminer l'excès de soufre. La teneur en soufre dans le composite carbone-soufre préparé est mesurée par Analyse Thermogravimétrique (TGA) à l'aide d'un appareil TA

Instrument Q500.

Dans tous les éléments, l'anode est du lithium métallique et le séparateur est une membrane microporeuse de polyoléfine commercialisée par la société Celgard sous la dénomination commerciale Celgard® 2500.

Tableau 1

| Elément | Cathode | | | | | Electrolyte (% vol***) |
|---|---|---|---|---|---|---|
| | soufre (% m**) | diamètre moyen des pores du carbone (nm) | pourcentage de carbone poreux (% m**) | composé conducteur électronique (% m**) | liant (% m**) | |
| A* | 53 | 6,5 | 32 | 8 | 7 | $LiPF_6$ 1 mol.$L^{-1}$ dans EC/DMC (20/80) |
| B* | 52 | 0,88 | 36 | 5 | 7 | $LiPF_6$ 1 mol.$L^{-1}$ dans EC/DMC (20/80) |
| C* | 53 | 6,5 | 32 | 8 | 7 | LiTFSI 1 mol.$L^{-1}$ dans Diméthoxyéthane (DME)/ dioxolane |
| D* | 59 | 0,88 | 29 | 5 | 7 | $LiPF_6$ 1 mol.$L^{-1}$ dans FEC/DMC (20/80) |
| E | 59 | 0,88 | 29 | 5 | 7 | LiFSI 1 mol.$L^{-1}$ dans FEC/DMC (20/80) |
| F* | 53 | 0,88 | 35 | 5 | 7 | LiFSI 1 mol.$L^{-1}$ dans DME/ dioxolane |
| G | 53 | 0,88 | 35 | 5 | 7 | LiFSI 1 mol.$L^{-1}$ dans FEC/DMC (20/80) |

* exemple ne faisant pas partie de l'invention
** les pourcentages sont des pourcentages massiques exprimés par rapport à la somme des masses des constituants de la cathode à l'exception du collecteur de courant.
*** les pourcentages sont des pourcentages en volume exprimés par rapport au volume total des solvants organiques.

A) Un premier test a été mené sur les éléments A et B dans le but d'évaluer l'effet du diamètre moyen des pores du carbone de la cathode sur les performances en décharge des éléments. Les éléments A et B contiennent la même anode, le même séparateur et le même électrolyte. Le carbone de la cathode de l'élément A présente une structure poreuse comprenant des pores avec un diamètre moyen de 6,5 nm. Le carbone de la cathode de l'élément B présente une structure poreuse comprenant des pores avec un diamètre moyen de 0,88 nm. Les courbes de décharge des éléments A et B ont été tracées et les capacités massiques initiales en décharge de ces éléments ont été mesurées. Les courbes de décharge sont représentées figure 2. L'élément A présente une capacité massique d'environ 150 mAh par gramme de soufre tandis que l'élément B présente une capacité massique d'environ 1645 mAh par gramme de soufre. Ces résultats montrent qu'un élément comprenant une cathode comprenant du carbone comprenant des pores avec un diamètre moyen de 6,5 nm et un solvant à base de carbonates ne présente pas une capacité massique élevée.

B) Un second test a été effectué afin de comparer les quantités de sulfure d'hydrogène (H2S) émises par les éléments C, D et E. A cette fin, les éléments C, D et E ont été déchargés jusqu'à atteindre une tension de 1V. La tension basse de 1V a permis de maximiser la quantité de soufre réduite en $Li_2S$ à la cathode. Les électrodes ont ensuite été prélevées des éléments et placées dans un bécher fermé contenant une source d'humidité afin de mesurer la quantité de sulfure d'hydrogène émise par réaction entre le sulfure de lithium $Li_2S$ et l'humidité. La source d'humidité est constituée d'eau et d'acide versés dans un bêcher. On a pris soin de ne pas laver la surface des électrodes afin de ne pas éliminer toute couche de produits qui serait présente à la surface de l'électrode. Les électrodes ont été séchées avant exposition à la source d'humidité.

Les quantités cumulées de sulfure d'hydrogène ont été relevées au cours du temps et sont représentées figure

3. On constate que l'électrode de l'élément E qui est selon l'invention est celle qui émet la quantité la plus faible de sulfure d'hydrogène. Il semblerait que les composés issus de la réduction du soufre au cours de la décharge restent dans la porosité de la cathode.

Les éléments D et E diffèrent uniquement par la nature du sel de l'électrolyte qui est $LiPF_6$ pour l'élément D et LiFSI pour l'élément E. La comparaison entre les résultats obtenus avec l'élément D et ceux obtenus avec l'élément E montre que le remplacement de $LiPF_6$ par LiFSI a permis de diminuer la quantité de sulfure d'hydrogène émis. La quantité plus faible de sulfure d'hydrogène émise par l'élément E montre que l'invention permet de réduire le risque de toxicité pour un utilisateur.

C) Un troisième test a été conduit sur les éléments F et G. Les éléments F et G diffèrent par la nature des solvants organiques de l'électrolyte. Les solvants organiques de l'élément G sont le monofluorocarbonate d'éthylène et le carbonate de diméthyle, qui font partie de la famille des carbonates. Les solvants organiques de l'élément F sont le 1,2-diméthoxyéthane (DME) et le dioxolane, qui font partie de la famille des éthers. Les courbes de décharge des éléments F et G ont été tracées et les capacités massiques initiales en décharge de ces éléments mesurées. Les courbes de décharge sont représentées figure 4. L'élément G présente une capacité massique d'environ 1750 mAh par gramme de soufre tandis que l'élément F présente une capacité massique d'environ 330 mAh par gramme de soufre, bien inférieure à celle de l'élément F. Ces résultats montrent que l'utilisation d'un solvant organique à base d'éthers ne permet pas d'obtenir un élément présentant une capacité massique suffisante.

## Revendications

1. Elément électrochimique (1) de type lithium/soufre comprenant :

    a) une cathode (2) comprenant :

      i) du carbone présentant une structure poreuse (5) comprenant des pores avec un diamètre moyen inférieur ou égal à 6 nm ;
      ii) du soufre avec un degré d'oxydation pouvant aller de 0 à -2 dans les pores du carbone ;

    b) un électrolyte comprenant :

      i) au moins un solvant organique qui est un carbonate ;
      ii) un ou plusieurs sels, au moins un sel étant du bis(fluorosulfonyl)imidure de lithium (LiFSI) ;

    c) une anode (4) comprenant du lithium métal ou un alliage métallique de lithium, dans lequel le diamètre moyen des pores est mesuré selon la méthode détaillée dans la description.

2. Elément électrochimique selon la revendication 1, dans lequel le carbone présente une structure poreuse comprenant des pores avec un diamètre moyen inférieur ou égal à 2 nm.

3. Elément électrochimique selon l'une des revendications précédentes, dans lequel au moins 50 % du volume poreux est constitué de pores avec un diamètre inférieur ou égal à 6 nm.

4. Elément électrochimique selon l'une des revendications précédentes, dans lequel au moins 50 % du volume poreux est constitué de pores avec un diamètre inférieur ou égal à 2 nm.

5. Elément électrochimique selon la revendication 4, dans lequel au moins 75 % du volume poreux est constitué de pores avec un diamètre inférieur ou égal à 2 nm.

6. Elément électrochimique selon l'une des revendications précédentes, dans lequel le soufre est du soufre élémentaire solide et :

    - la masse de soufre élémentaire solide représente de 30 à 80 % de la somme des masses de soufre élémentaire solide et de carbone ;
    - la masse du carbone représente de 70 à 20 % de la somme des masses de soufre élémentaire solide et de carbone.

7. Elément électrochimique selon la revendication 6, dans lequel :

- la masse de soufre élémentaire solide représente de 55 à 65 % de la somme des masses de soufre élémentaire solide et de carbone ;
- la masse du carbone représente de 45 à 35 % de la somme des masses de soufre élémentaire solide et de carbone.

**8.** Elément électrochimique selon l'une des revendications précédentes, dans lequel la cathode comprend en outre au moins un liant et au moins un composé conducteur électronique et le soufre est du soufre élémentaire solide et :

- la masse de soufre élémentaire solide représente de 30 à 80 % de la somme des masses du soufre élémentaire solide, du carbone, dudit au moins un liant et dudit au moins un composé conducteur électronique ;
- la masse de carbone représente de 10 à 60 % de la somme des masses du soufre élémentaire solide, du carbone, dudit au moins un liant et dudit au moins un composé conducteur électronique ;
- la masse dudit au moins un liant représente de 3 à 8 % de la somme des masses du soufre élémentaire solide, du carbone, dudit au moins un liant et dudit au moins un composé conducteur électronique ;
- la masse dudit au moins un composé conducteur électronique représente de 2 à 7 % de la somme des masses du soufre élémentaire solide, du carbone, dudit au moins un liant et dudit au moins un composé conducteur électronique.

**9.** Elément électrochimique selon l'une des revendications précédentes, dans lequel l'électrolyte comprend un premier solvant organique qui est un carbonate cyclique et un second solvant organique qui est un carbonate linéaire.

**10.** Elément électrochimique selon la revendication 9, dans lequel :

- le volume du ou des carbonate(s) cyclique(s) représente de 10 à 50 % du volume total des solvants organiques ;
- le volume du ou des carbonate(s) linéaire(s) représente de 50 à 90 % du volume total des solvants organiques.

**11.** Elément électrochimique selon l'une des revendications 9 à 10, dans lequel le carbonate cyclique est monosubstitué par du fluor.

**12.** Elément électrochimique selon l'une des revendications précédentes, dans lequel l'électrolyte ne comprend aucun ester et/ou ne comprend aucun éther.

**13.** Elément électrochimique selon l'une des revendications 9 à 12, dans lequel le carbonate cyclique est du carbonate d'éthylène, éventuellement monosubstitué par du fluor, et le carbonate linéaire est du carbonate de diméthyle.

**14.** Elément électrochimique selon l'une des revendications précédentes, dans lequel 20% au plus du volume poreux du carbone est constitué de pores avec un diamètre supérieur à 6 nm et allant jusqu'à 50 nm.

**15.** Elément électrochimique selon la revendication 14, dans lequel 10% au plus du volume poreux du carbone est constitué de pores avec un diamètre supérieur à 6 nm et allant jusqu'à 50 nm.

## Patentansprüche

**1.** Elektrochemisches Element (1) des Lithium-Schwefel-Typs, umfassend:

a) eine Kathode (2), umfassend:

i) Kohlenstoff, der eine poröse Struktur (5) aufweist, umfassend Poren mit einem durchschnittlichen Durchmesser kleiner oder gleich 6 nm;
ii) Schwefel mit einem Oxydationsgrad, der von 0 bis -2 in den Poren des Kohlenstoffs gehen kann;

b) einen Elektrolyten, umfassend:

i) mindestens ein organisches Lösungsmittel, das ein Karbonat ist;
ii) ein oder mehrere Salze, wobei mindestens ein Salz Lithium-Bis(fluorsulfonyl)imid (LiFSI) ist;

c) eine Anode (4), umfassend Lithiummetall oder eine metallische Lithium-Legierung,

wobei der durchschnittliche Durchmesser der Poren nach der in der Beschreibung angeführten Methode gemessen wird.

2. Elektrochemisches Element nach Anspruch 1, bei dem der Kohlenstoff eine poröse Struktur aufweist, umfassend Poren mit einem durchschnittlichen Durchmesser kleiner oder gleich 2 nm.

3. Elektrochemisches Element nach einem der vorhergehenden Ansprüche, bei dem mindestens 50 % des porösen Volumens von Poren mit einem Durchmesser kleiner oder gleich 6 nm gebildet sind.

4. Elektrochemisches Element nach einem der vorhergehenden Ansprüche, bei dem mindestens 50 % des porösen Volumens von Poren mit einem Durchmesser kleiner oder gleich 2 nm gebildet sind.

5. Elektrochemisches Element nach Anspruch 4, bei dem mindestens 75 % des porösen Volumens von Poren mit einem Durchmesser kleiner oder gleich 2 nm gebildet sind.

6. Elektrochemisches Element nach einem der vorhergehenden Ansprüche, bei dem der Schwefel fester Elementarschwefel ist und:

- die feste Elementarschwefelmasse 30 bis 80 % der Summe der Massen von festem Elementarschwefel und Kohlenstoff darstellt;
- die Kohlenstoffmasse 70 bis 20 % der Summe der Massen von festem Elementarschwefel und Kohlenstoff darstellt.

7. Elektrochemisches Element nach Anspruch 6, bei dem:

- die feste Elementarschwefelmasse 55 bis 65 % der Summe der Massen von festem Elementarschwefel und Kohlenstoff darstellt;
- die Kohlenstoffmasse 45 bis 35 % der Summe der Massen von festem Elementarschwefel und Kohlenstoff darstellt.

8. Elektrochemisches Element nach einem der vorhergehenden Ansprüche, bei dem die Kathode ferner mindestens ein Bindemittel und mindestens eine elektronenleitende Verbindung umfasst und der Schwefel fester Elementarschwefel ist, und:

- die feste Elementarschwefelmasse 30 bis 80 % der Summe der Massen des festen Elementarschwefels, des Kohlenstoffs, des mindestens einen Bindemittels und der mindestens einen elektronenleitenden Verbindung darstellt;
- die Kohlenstoffmasse 10 bis 60 % der Summe der Massen des festen Elementarschwefels, des Kohlenstoffs, des mindestens einen Bindemittels und der mindestens einen elektronenleitenden Verbindung darstellt;
- die Masse des mindestens einen Bindemittels 3 bis 8 % der Summe der Massen des festen Elementarschwefels, des Kohlenstoffs, des mindestens einen Bindemittels und der mindestens einen elektronenleitenden Verbindung darstellt;
- die Masse der mindestens einen elektronenleitenden Verbindung 2 bis 7 % der Summe der Massen des festen Elementarschwefels, des Kohlenstoffs, des mindestens einen Bindemittels und der mindestens einen elektronenleitenden Verbindung darstellt.

9. Elektrochemisches Element nach einem der vorhergehenden Ansprüche, bei dem der Elektrolyt ein erstes organisches Lösungsmittel, das ein zyklisches Karbonat ist, und ein zweites organisches Lösungsmittel, das ein lineares Karbonat ist, umfasst.

10. Elektrochemisches Element nach Anspruch 9, bei dem:

- das Volumen des oder der zyklischen Karbonats(e) 10 bis 50 % des Gesamtvolumens der organischen Lösungsmittel darstellt;
- das Volumen des oder der linearen Karbonats(e) 50 bis 90 % des Gesamtvolumens der organischen Lösungsmittel darstellt.

11. Elektrochemisches Element nach einem der Ansprüche 9 bis 10, bei dem das zyklische Karbonat durch Fluor

monosubstituiert ist.

**12.** Elektrochemisches Element nach einem der vorhergehenden Ansprüche, bei dem der Elektrolyt kein Ester und/oder kein Ether umfasst.

**13.** Elektrochemisches Element nach einem der Ansprüche 9 bis 12, bei dem das zyklische Karbonat Ethylenkarbonat, eventuell substituiert durch Fluor, und das lineare Karbonat Dimethylkarbonat ist.

**14.** Elektrochemisches Element nach einem der vorhergehenden Ansprüche, bei dem höchstens 20 % des porösen Volumens von Poren mit einem Durchmesser über 6 nm und bis zu 50 nm gebildet sind.

**15.** Elektrochemisches Element nach Anspruch 14, bei dem höchstens 10 % des porösen Volumens des Kohlenstoffs von Poren mit einem Durchmesser über 6 nm und bis zu 50 nm gebildet sind.

## Claims

**1.** Lithium/sulphur electrochemical cell (1) comprising:

a) a cathode (2) comprising:

i) carbon having a porous structure (5) comprising pores with a mean diameter less than or equal to 6 nm;
ii) sulphur with a degree of oxidation that can range from 0 to -2 in the pores of the carbon;

b) an electrolyte comprising:

i) at least one organic solvent which is a carbonate;
ii) one or more salts, at least one salt being lithium bis(fluorosulfonyl)imide (LiFSI);

c) an anode (4) comprising lithium metal or a metallic alloy of lithium,
wherein the mean pore diameter is determined by the method set out in the description.

**2.** Electrochemical cell according to claim 1, wherein the carbon has a porous structure comprising pores with a mean diameter less than or equal to 2 nm.

**3.** Electrochemical cell according to one of the preceding claims, wherein at least 50% of the porous volume is made up of pores with a diameter less than or equal to 6 nm.

**4.** Electrochemical cell according to one of the preceding claims, wherein at least 50% of the porous volume is made up of pores with a diameter less than or equal to 2 nm.

**5.** Electrochemical cell according to claim 4, wherein at least 75% of the porous volume is made up of pores with a diameter less than or equal to 2 nm.

**6.** Electrochemical cell according to any one of the preceding claims, wherein the sulphur is solid elemental sulphur and:

- the mass of the solid elemental sulphur represents from 30 to 80% of the sum of the masses of the solid elemental sulphur and carbon;
- the mass of the carbon represents from 70 to 20% of the sum of the masses of the solid elemental sulphur and carbon.

**7.** Electrochemical cell according to claim 6, wherein:

- the mass of the solid elemental sulphur represents from 55 to 65% of the sum of the masses of the solid elemental sulphur and carbon ;
- the mass of the carbon represents from 45 to 35% of the sum of the masses of the solid elemental sulphur and carbon.

8. Electrochemical cell according to one of the preceding claims, wherein the cathode further comprises at least one binder and at least one electrical conductor compound and the sulphur is solid elemental sulphur and:

- the mass of the solid elemental sulphur represents from 30 to 80% of the sum of the masses of the solid elemental sulphur, the carbon, said at least one binder and said at least one electrical conductor compound;
- the mass of the carbon represents from 10 to 60% of the sum of the masses of the solid elemental sulphur, the carbon, said at least one binder and said at least one electrical conductor compound;
- the mass of said at least one binder represents from 3 to 8% of the sum of the masses of the solid elemental sulphur, the carbon, said at least one binder and said at least one electrical conductor compound;
- the mass of said at least one electrical conductor compound represents from 2 to 7% of the sum of the masses of the solid elemental sulphur, the carbon, said at least one binder and said at least one electrical conductor compound.

9. Electrochemical cell according to one of the preceding claims, wherein the electrolyte comprises a first organic solvent that is a cyclic carbonate and a second organic solvent that is a linear carbonate.

10. Electrochemical cell according to claim 9 wherein:

- the volume of the cyclic carbonate(s) represents from 10 to 50% of the total volume of organic solvents;
- the volume of the linear carbonate(s) represents from 50 to 90% of the total volume of organic solvents.

11. Electrochemical cell according to any one of claims 9 to 10, wherein the cyclic carbonate is monosubstituted by fluorine.

12. Electrochemical cell according to one of the preceding claims, wherein the electrolyte does not comprise any ester and/or does not comprise any ether.

13. Electrochemical cell according to one of claims 9 to 12, wherein the cyclic carbonate is ethylene carbonate, optionally monosubstituted by fluorine, and the linear carbonate is dimethyl carbonate.

14. Electrochemical cell according to one of the preceding claims, wherein at most 20% of the porous volume of the carbon is made up of pores with a diameter greater than or equal to 6 nm and ranging up to 50 nm.

15. Electrochemical cell according to claim 14, wherein at most 10% of the porous volume of the carbon is made up of pores with a diameter greater than or equal to 6 nm and ranging up to 50 nm.

Figure 1

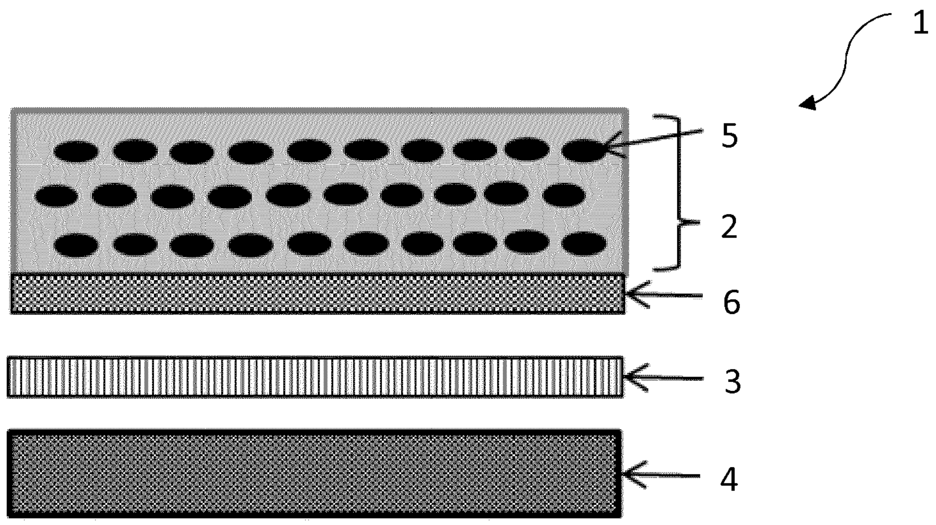


Figure 2

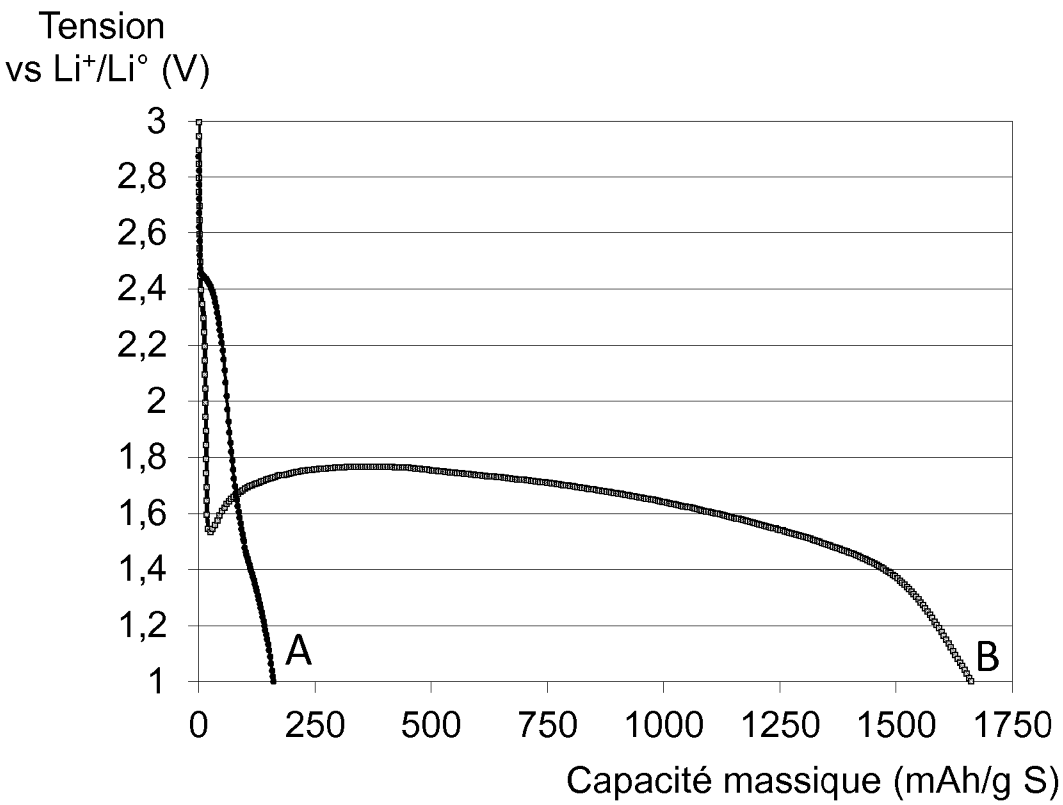

Figure 3

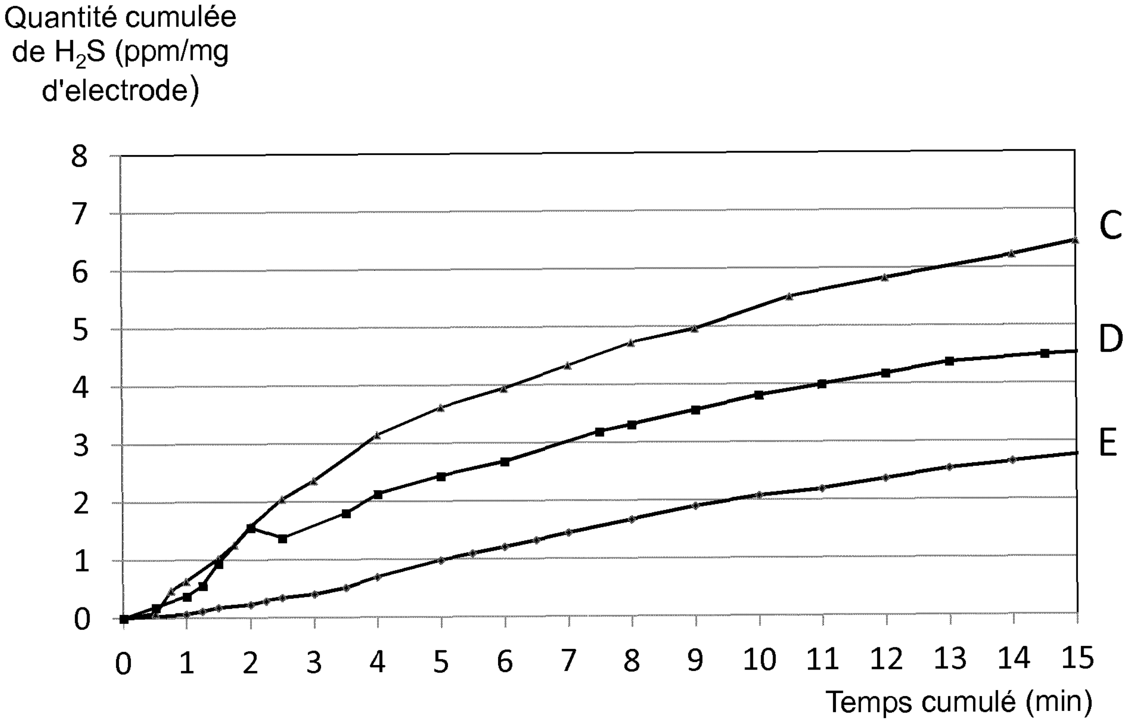


Figure 4

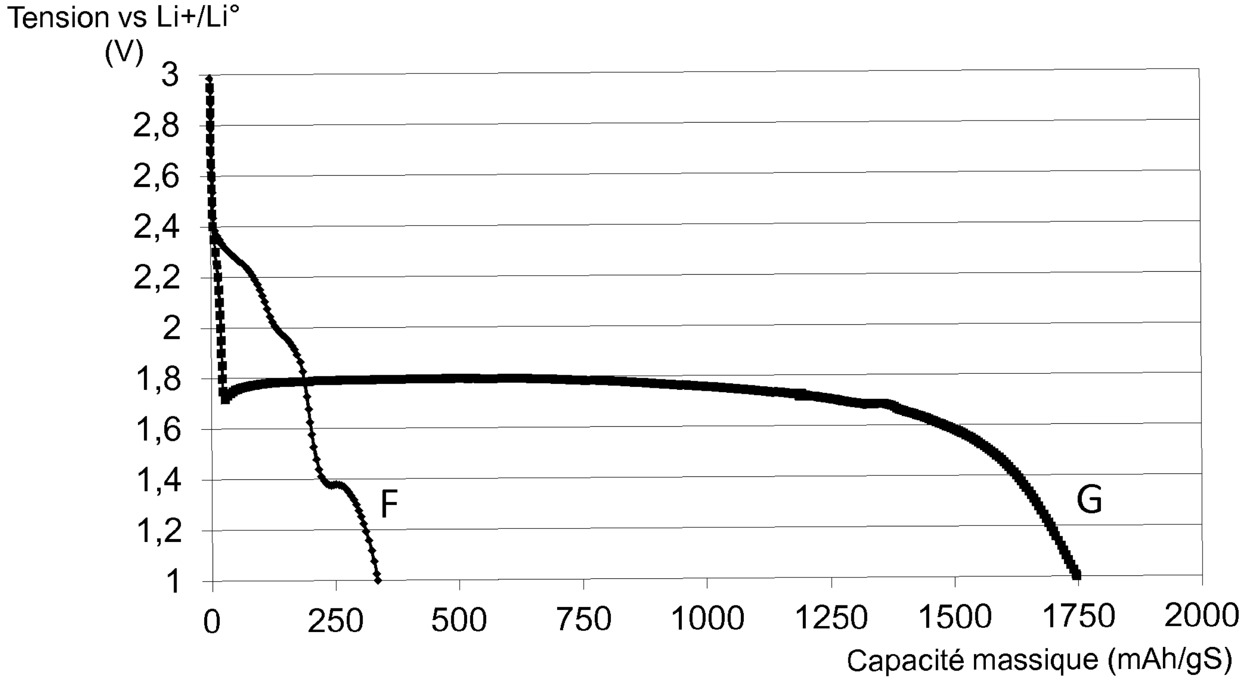

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2016192111 A
- WO 2012100301 A
- CN 102903887
- DE 112015005161
- JP 2015115270 A